# EUROPÄISCHE PATENTSCHRIFT

(11) **EP 0 646 518 B1**
(45) Veröffentlichungstag und Bekanntmachung des Hinweises auf die Patenterteilung: **05.03.1997**
(21) Anmeldenummer: 94113997.4
(22) Anmeldetag: 07.09.1994
(51) Int. Cl.: B62D 55/26

(54) **Laufband für Raupenfahrzeuge, insb. Schneefahrzeuge**
Track for tracked vehicles, especially snow vehicles
Chenille pour véhicules à chenilles notamment véhicules pouvant se déplacer sur neige

(30) Priorität: 01.10.1993 DE 4333602
(43) Veröffentlichungstag der Anmeldung: 05.04.1995
(73) Patentinhaber: Jäger, Arnold, D-31303 Burgdorf (DE)
(72) Erfinder: Jäger, Arnold, D-31303 Burgdorf (DE)
(74) Vertreter: Depmeyer, Lothar

(56) Entgegenhaltungen:
- US-A- 5 015 219
- US-A- 5 201 574

## Beschreibung

Die Erfindung betrifft ein Laufband für Raupenfahrzeuge, insb. für Schneefahrzeuge, mit einem oder mehreren, einander parallelen, zugfesten Bändern, auf denen quer verlaufende Mitnehmer mit Hilfe von die Bänder und den im Querschnitt u-förmigen Fuss der Mitnehmer durchsetzenden Bolzen von Schrauben oder Nieten befetigt sind, wobei die beiden Schenkel des Fusses sich im wesentlichen senkrecht zu den Bändern und der die Schenkel verbindende Steg in Bandlängsrichtung verläuft.

Ein derartiges Laufband ist z.B. aus der US-A-5 015 219 bekannt.

Bei den bekannten Laufbändern dieser Art ist das den Mitnehmern zugekehrte Ende der Bolzen mit Gewinde versehen; es dient zur Aufnahme einer Mutter, die innen auf dem Steg der Mitnehmer aufliegt. Bei stärkeren Belastungen und auch bei Dauertbelastung besteht hierbei die Gefahr, dass die Bolzen im Bereich des Übergangs zu den Mitnehmern brechen, wobei diese Brüche auf Kerb- und Abscherwirkungen zurückgeführt werden können.

Der Erfindung liegt die Aufgabe zugrunde, die eingangs erwähnten Laufbänder so zu verbessern, dass ein Bruch oder vorzeitiger Verschleiss der Bolzen zumindest weitgehend eingeschränkt und damit die Befestigung der Mitnehmer sichergestellt ist.

Zur Lösung dieser Aufgabe ist erfindungsgemäss das den Mitnehmern zugekehrte Ende der Bolzen mit einem Widerlager für ein aus Gummi oder gummiähnlichen Stoffen ( Elastomere ) bestehendes Polster versehen, das sich am Steg der Mitnehmer abstützt. Vorzugsweise ist dieses Polster vorgespannt, was durch Anziehen der Mutter des Bolzens geschehen kann, wenn ein Schraubbolzen benutzt wird. Zweckmässerweise ist dieses Polster auch so bemessen, dass es im eingebauten Zustand einen Teil des u-förmigen Fusses der Mitnehmer ausfüllt. Ausserdem ist vorzugsweise die Bohrung der Mitnehmer - in seinem Steg befindlich - auch so bemessen, dass sie geringfügig grösser ist als der Bolzendurchmesser.

Dieses Polster führt zu einer nicht starren, sondern elastischen Beanspruchung der Bolzen, um sie so vor Kerb- und Scherbeanspruchungen zu schützen; zudem kann vorteilhafterweise auch der Mitnehmer eine gewisse Ausweichbewegung ausführen, wenn er beansprucht wird, ohne dabei seine Fähigkeit, die Traktionswirkung zu bewältigen, zu verlieren.

Der erwähnte Polsterkörper befindet sich innerhalb des Mitnehmerfusses und somit geschützt untergebracht. Um unter diesen Verhältnissen eine elastische Verformbarkeit des Elastomerkörpers herbeiführen zu können z.B. zum Vorspannen des Polsterkörpers, erhält der Elastomerkörper Ausnehmungen, die sich mit dem Verspannen verkleinern bzw. durch den sich ausdehnenden Gummi ausgefüllt werden.

Darüber hinaus ist es ferner vorteilhaft, wenn das erwähnte Polster und das zugehörige Widerlager am Ende des Bolzens so bemessen sind, dass beide Elemente den u-förmig gestalteten Fuss zumindest praktisch ausfüllen.

Auch wird der Mitnehmer in bekannter Weise so ausgeführt, dass einer der beiden Schenkel des u-förmigen Fusses den eigentlichen Mitnehmer, und zwar durch eine entsprechende Schenkelverlängerung bildet.

Weitere Einzelheiten der Erfindung werden anhand der Zeichnung erläutert, in der ein Ausführungsbeispiel der Erfindung dargestellt ist. Es zeigen :
- Fig. 1: einen Längenabschnitt eines Laufbandes für ein Raupenfahrzeug zum Einsatz im Schnee in Richtung auf die Laufseite des Laufbandes gesehen,
- Fig. 2: einen Schnitt nach der Linie II - II von Fig. 1,
- Fig. 3: ein aus Gummi bestehendes Polster für ein Laufband gemäss Fig. 1 und
- Fig. 4: das Polster gemäss Fig. 3 im Querschnitt.

Das Laufband wird im wesentlichen von fünf ( nur drei dargestellt ) einander parallelen, zugfesten, biegsamen, umlaufenden Bändern 1 gebildet , die am Fahrzeug an Rädern geführt sind und zur Halterung und Befestigung von quer angeordneten Mitnehmern 2 dienen, die den Vortrieb im Schnee sicherstellen sollen. Die Mitnehmer 2 erstrecken sich über die gesamte Breite des Laufbandes und überbrücken die Abstände zwischen den Bändern 1.

Die Bänder 1 haben einen zugfesten Kern 3 in Form von übereinander angeordneten gummierten Gewebelagen als Vollgewebe. Der Kern 3 ist oben und unten durch eine haftend befestigte Deckschicht 4 aus Gummi bedeckt.

Die Mitnehmer 2 bestehen aus einem Stahlprofil mit einem der Verankerung dienenden, u-förmigen Fuss mit einem parallel zum Band 1 und an diesem anliegenden Steg 5 und senkrecht abstehenden Schenkeln 6, von denen der eine Schenkel zu dem eigentlichen Greifer- oder Mitnehmerteil 7 verlängert ist. Der Steg 5 hat drei im Abstand voneinander angeordnete Löcher 8 zur Aufnahme von Schraubbolzen 9, die ein Loch 10 im Band 1 und auf der Innenseite der Bänder 1 einen Metallstreifen 11 mit abgewinkelten Rändern 12 durchsetzen.

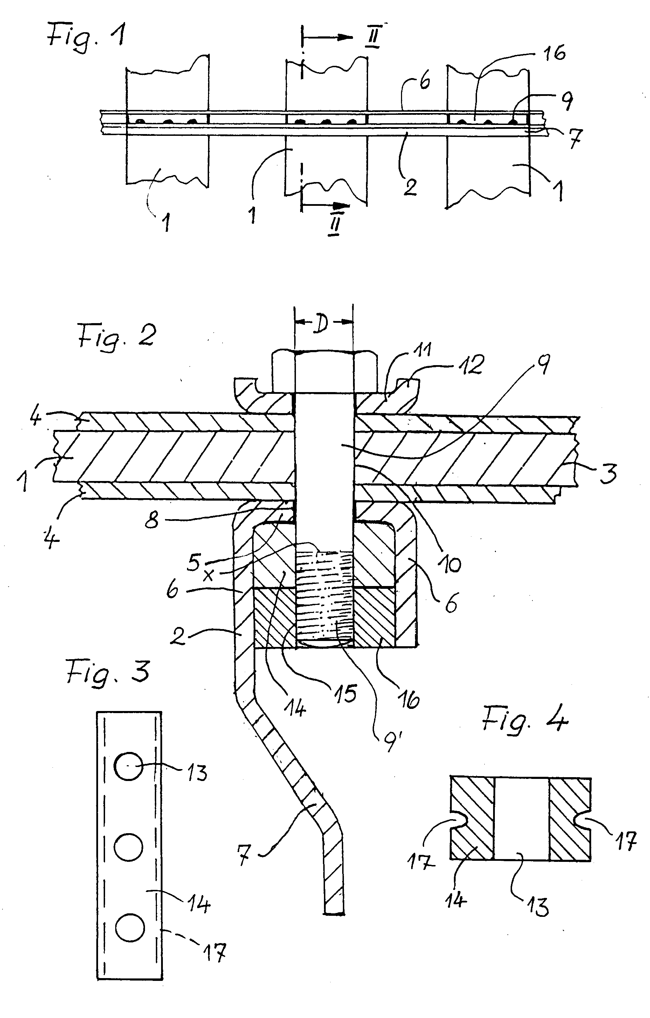

Das freie Ende der Schraubbolzen 9 ist ferner durch Löcher 13 eines Streifens 14 aus Gummi hindurchgeführt und in Schraub- bzw. Gewindelöcher 15 einer Lasche 16 aus Stahl eingeschraubt. Die Elemente 14, 16 haben eine den Bändern 1 entsprechende Länge und füllen zusammen den Raum zwischen den beiden Schenkeln 6 und dem Steg 5 des Fusses der Mitnehmer 2 aus.Der Streifen 14 hat zudem an beiden Seiten längs verlaufende Nuten 17; sie erlauben eine elastische Verformung, wenn der Schraubbolzen 9 mehr und mehr in die Gewindelöcher 15 der Lasche 16 eingeschraubt wird. Diese Verformung kann so weit fortgesetzt werden, dass sich die beiden Nuten 17 verkleinern oder - wie in Fig. 2 dargestellt - ganz ausgefüllt sind aufgrund des sich ausdehnenden Gummis, wobei dann immer noch Ausweichräume für den sich verformenden Gummi an den Endflächen des Streifens 14 ergeben.

Eine solche Zwischenschaltung eines Streifens 14 zwischen dem Ende des Schraubbolzens 9 mit der als Widerlager dienenden Lasche 16 einerseits und dem Steg 5 andererseits führt zu einer elastischen Halterung der Mitnehmer 2, zumal die Stege 5 auf der Rückseite noch auf der aus Gummi bestehenden Deckschicht 4 aufliegen. Eine noch günstigere Halterung zur Vermeidung von Brüchen des Schraubbolzens 9 besteht darin, dass der Durchmesser der Bohrung 8 im Steg 5 um etwa 5 - 15 % grösser gewählt wird im Vergleich zum Durchmesser des Schaftes des Schraubbolzens 9. Dieser Durchmesser ist mit D bezeichnet. Bei einer solchen Durchmesserwahl kann der Mitnehmer 7 gegenüber dem Band 1 noch geringfügige Kippbewegungen ausführen, die jedoch aufgrund des Streifens 14 elastisch abgefangen und begrenzt werden.

An sich ist es möglich, für jeden Bolzen 9 ein sich zumindest im wesentlichen über den gegenseitigen Abstand der beiden Schenkel 6 erstreckendes mutterähnliches Gebilde zu benutzen, jedoch ist es aus Festigkeitsgründen und wegen der Fesselung des Streifens 14 vorteilhafter, wenn eine Lasche 16 verwendet wird, die sich über die Länge der Streifen 14 bzw. die Breite der Bänder 1 erstreckt. Auch ist es nicht unbedingt erforderlich, die Ausweichräume in Form der Nuten 17 seitlich aussen anzuordnen, vielmehr können sie auch an anderen Aussenflächen sein oder gar Hohlräume bilden.

Die aufgrund der Erfindung sich ergebende günstige Wirkung kann darin gesehen werden, dass am freien Ende des Schraubbolzenbs 9 zu den Gewindelöchern 15 hin durch das Vorhandensein des Elastomers ( Streifen 14 ) festigkeits- und elastizitätsmässig kein abrupter,sondern ein stufenartiger Übergang gegeben ist, der die erwähnten Bolzenbrüche weitgehend ausschaltet.

Zur Vermeidung von Bolzenbrüchen ist es weiterhin vorteilhaft, wenn der Übergang x zwischen dem glatten, zylindrischen, nicht gekerbten Schaft des Bolzens 9 und dem mit Gewinde versehenen Abschnitt 9' im Bereich bzw. auf der Höhe des Streifens 14 angeordnet ist. Insb. sollte dieser Übergang x - wie in Fig. 2 dargestellt - etwa auf halber Höhe des Polsters bzw. Streifens 14 liegen.

## Patentansprüche

1. Laufband für Raupenfahrzeuge, insb. für Schneefahrzeuge, mit einem oder mehreren, einander parallelen, zugfesten Bändern (1), auf denen querverlaufende Mitnehmer (7) mit Hilfe von die Bänder und den im Querschnittt u-förmigen Fuss (5, 6) der Mitnehmer durchsetzenden Bolzen (9), von Schrauben oder Nieten befestigt sind, wobei die beiden Schenkel (6) des Fusses sich im wesentlichen senkrecht zu den Bändern und der die Schenkel verbindende Steg (5) parallel zur Bandebene sich erstreckt und an dem Bandkörper anliegen kann, dadurch gekennzeichnet, dass das den Mitnehmern (7) zugekehrte Ende der Bolzen (9) mit einem Widerlager (16) für ein aus Gummi oder gummiähnlichen Stoffen ( Elastomere ) bestehendes Polster (14) versehen ist, das sich am Steg (5) des Fusses abstützt.

2. Band nach Anspruch 1, dadurch gekennzeichnet, dass sich der Bolzen (9) mit Spiel in der Bohrung (8) des Steges (5) befindet.

3. Band nach Anspruch 1, dadurch gekennzeichnet, dass die Breite des Polsters (14) und des Widerlagers (16) zumindest im wesentlichen dem gegenseitigen Abstand der beiden Schenkel ((6) entspricht.

4. Band nach Anspruch 1 und 3, dadurch gekennzeichnet, dass das Polster (14) und das Widerlager (16) zumindest im wesentlichen den u-förmigen Fuss (5,6) der Mitnehmer (2) ausfüllen.

5. Band nach Anspruch 1 und 3, dadurch gekennzeichnet, dass das Polster (14) im nicht verformten Zustand eine oder mehrere Ausnehmungen (17) oder Hohlräume aufweist, die bei einer Druckverformung durch den Bolzen (9) ganz oder teilweise aufgehoben bzw. verkleinert werden.

6. Band nach Anspruch 2, dadurch gekennzeichnet, dass der Durchmesser der Bohrung (8) im Steg (5) um etwa 5 - 15% grösser ist im Vergleich zum Durchmesser (D) des Bolzens (9).

7. Band nach Anspruch 5, dadurch gekennzeichnet, dass das Polster (14) an seinen Seitenflächen mit längs verlaufenden Nuten (17) versehen ist.

8. Band nach Anspruch 1, dadurch gekennzeichnet, dass sich das Polster (14) und das Widerlager (16) im wesentlichen über die Breite der Bänder (1) erstrecken.

9. Band nach Anspruch 1, dadurch gekennzeichnet, dass der Bolzen ein Schraubbolzen (9) ist und das Polster (14) durch Schrauben vorgespannt ist.

10. Band nach Anspruch 8, dadurch gekennzeichnet, dass der Gummi od. dgl. des Polsters (14) an den im Bereich der Bandränder befindlichen Stirnflächen des Polsters (14) frei verformbar ist.

11. Band nach Anspruch 1, dadurch gekennzeichnet, dass das Widerlager (16) eine oder mehrere Bohrungen (15) zur Aufnahme der Bolzen (9) aufweist.

12. Band nach Anspruch 11, dadurch gekennzeichnet, dass die Bohrungen (15) Gewindelöcher sind.

13. Band nach Anspruch 1 und 9, dadurch gekennzeichnet, dass der Übergang (x) zwischen dem glatten Schaft des Bolzens (9) und dem mit Gewinde (9') versehenen Abschnitt des Bolzenschaftes im Bereich des Polsters (14) angeordnet ist.

14. Band nach Anspruch 13, dadurch gekennzeichnet, dass sich der Übergang (x) etwa auf halber Höhe des Polsters (14) befindet.

## Claims

1. Tread strip for caterpillar-tracked vehicles, more especially for snow vehicles, having one or more substantially inextensible bands (1), which extend parallel to one another and on which transversely extending entrainment means are mounted by means of bolts (9), which extend through the bands and the base (5, 6) of the entrainment means which has a U-shaped cross-section, or by means of screws or rivets, the two portions (6) of the base extending substantially perpendicular to the bands, and the web (5), which connects the portions, extending parallel to the strip plane and being abuttable against the strip body, characterised in that the end of the bolts (9) facing the entrainment means (7) is provided with an abutment (16) for a cushioning pad (14), which is formed from rubber or rubber-like substances (elastomers) and is supported on the web (5) of the base.

2. Strip according to claim 1, characterised in that the bolt (9) is situated in the bore (8) in the web (5) with some clearance.

3. Strip according to claim 1, characterised in that the width of the cushioning pad (14) and of the abutment (16) corresponds at least substantially to the mutual spacing between the two portions (6).

4. Strip according to claims 1 and 3, characterised in that the cushioning pad (14) and the abutment (16) fill at least substantially the U-shaped base (5, 6) of the entrainment means (2).

5. Strip according to claims 1 and 3, characterised in that, in its non-deformed state, the cushioning pad (14) has one or more recesses (17) or cavities, which are wholly or partially eliminated or reduced in the event of a pressure deformation by the bolt (9).

6. Strip according to claim 2, characterised in that the diameter of the bore (8) in the web (5) is substantially 5 - 15 % greater than the diameter (D) of the bolt (9).

7. Strip according to claim 5, characterised in that the cushioning pad (14) is provided on its lateral faces with longitudinally extending grooves (17).

8. Strip according to claim 1, characterised in that the cushioning pad (14) and the abutment (16) extend substantially over the width of the bands (1).

9. Strip according to claim 1, characterised in that the bolt is a screw bolt (9), and the cushioning pad (14) is initially tensioned by screws.

10. Strip according to claim 8, characterised in that the rubber or the like of the cushioning pad (14) is freely deformable at the end faces of the cushioning pad (14) situated in the region of the strip edges.

11. Strip according to claim 1, characterised in that the abutment (16) has one or more bores (15) for the accommodation of the bolts (9).

12. Strip according to claim 11, characterised in that the bores (15) are threaded holes.

13. Strip according to claims 1 and 9, characterised in that the transition (x) between the smooth shank of the bolt (9) and the portion of the bolt shank provided with thread (9') is disposed in the region of the cushioning pad (14).

14. Strip according to claim 13, characterised in that the transition (x) is situated substantially halfway up the cushioning pad (14).

## Revendications

1. Bande de roulement pour véhicules sur chenilles, notamment pour véhicules de neige, comportant une ou plusieurs bandes (1) parallèles, résistant à la traction sur lesquelles des pièces d'entraînement (7), qui s'étendent transversalement, sont fixées par des vis ou des rivets à l'aide de boulons (9) traversant les bandes et la section transversale en forme de U de l'embase (5, 6) des pièces d'entraînement, les deux branches (6) de l'embase étant sensiblement perpendiculaires aux bandes, et la barrette (5) reliant les branches s'étendant parallèlement au plan des bandes et pouvant prendre appui sur le corps des bandes, caractérisée par le fait que l'extrémité des boulons (9) orientée vers les pièces d'entraînement (7) est munie d'une butée (16) destinée à un rembourrage (14) constitué de caoutchouc ou de matières analogues au caoutchouc (élastomères), qui prend appui sur la barrette (5) de l'embase.

2. Bande selon la revendication 1, caractérisée par le fait que le boulon (9) est inséré avec du jeu dans le perçage (8) de la barrette (5).

3. Bande selon la revendication 1, caractérisée par le fait que la largeur du rembourrage (14) et de la butée (16) correspond, au moins sensiblement, à la distance mutuelle entre les deux branches (6).

4. Bande selon les revendications 1 et 3, caractérisée par le fait que le rembourrage (14) et la butée (16) remplissent, au moins sensiblement, l'embase (5, 6) en forme de U des pièces d'entraînement (2).

5. Bande selon les revendications 1 et 3, caractérisée par le fait que le rembourrage (14) comporte à l'état non déformé un ou plusieurs évidements (17) ou espaces creux, qui sont supprimés entièrement ou en partie, ou rétrécis, lors de la déformation par compression par le boulon (9).

6. Bande selon la revendication 2, caractérisée par le fait que le diamètre du perçage (8) dans la barrette (5) est d'environ 5 à 15 % supérieur au diamètre (D) du boulon (9).

7. Bande selon la revendication 5, caractérisée par le fait que le rembourrage (14) est pourvu de rainures (17) qui s'étendent le long de ses surfaces latérales.

8. Bande selon la revendication 1, caractérisée par le fait que le rembourrage (14) et la butée (16) s'étendent sensiblement sur la largeur des bandes (1).

9. Bande selon la revendication 1, caractérisée par le fait que le boulon est un boulon fileté (9) et que le rembourrage (14) est précontraint par des vis.

10. Bande selon la revendication 8, caractérisée par le fait que le caoutchouc ou analogue du rembourrage (14) est librement déformable aux surfaces frontales du rembourrage (14) situées sur les bords des bandes.

11. Bande selon la revendication 1, caractérisée par le fait que la butée (16) comporte un ou plusieurs perçages (15) destinés à la réception des boulons (9).

12. Bande selon la revendication 11, caractérisée par le fait que les perçages (15) sont des trous taraudés.

13. Bande selon les revendications 1 et 9, caractérisée par le fait que la transition (x) entre la tige lisse du boulon (9) et la partie filetée (9') de la tige du boulon est située dans la zone du rembourrage (14).

14. Bande selon la revendication 13, caractérisée par le fait que la transition (x) est située approximativement à mi-hauteur du rembourrage (14).
